# EUROPEAN PATENT APPLICATION

(11) **EP 3 222 691 A1**
(43) Date of publication of application: **27.09.2017**
(21) Application number: 16162168.5
(22) Date of filing: 24.03.2016
(51) Int. Cl.: C09J 133/08, C09D 133/08, C08F 220/18, C08K 5/00, C08F 2/44

(54) **WATER-BASED POLYMER DISPERSIONS COMPRISING HYDROPHOBIC ANTIMONY-FREE FLAME RETARDANTS**

(71) Applicant: Henkel AG & Co. KGaA, 40589 Düsseldorf (DE); Henkel IP & Holding GmbH, 40589 Düsseldorf (DE)
(72) Inventor: SOMMER, Oliver, 40593 Düsseldorf (DE); HRZIBEK, Martin, 42781 Haan (DE); EICHELMANN, Holger, 40724 Hilden (DE); SAUCA, Sorin N., Timisoara, 300152 (RO); ZHAO, Ligang, 40593 Düsseldorf (DE); KRUG, Robin, 40589 Düsseldorf (DE); MOOS, Jan, Greenville, SC South Carolina 29615 (US); LAPOTA, Tracey, Greenville, SC South Carolina 29617 (US)

(57) **Abstract**

The present invention relates to an aqueous dispersion of polymeric particles comprising an acrylic polymer and a hydrophobic flame retardant, methods for their production, adhesives and coating compositions comprising said dispersion, as well as the use of said dispersion in adhesives and coating compositions.

## Description

The present invention relates to an aqueous dispersion of polymeric particles comprising an acrylic polymer and a hydrophobic flame retardant, methods for their production, adhesives and coating compositions comprising said dispersion, as well as the use of said dispersion in adhesives and coating compositions.

Aqueous adhesive and coating compositions are widely used as they are sustainable, non-toxic and hence advantageous over adhesives and coating systems based on volatile organic compounds. In order to provide flame retardant properties to said adhesives and coatings, flame retardants are used. Water miscible flame retardants are commonly based on toxic heavy metals and therefore disadvantageous. While the majority of flame retardants are hydrophobic, they typically suffer from the drawback that their hydrophobicity causes problems during the production of aqueous adhesives and coating compositions. Specifically, to provide a flame retardant aqueous adhesive or coating composition free of heavy metals, said adhesives and coatings are commonly formulated in a first step and the flame retardant is blended in a second step. However, this established approach often causes stability problems, as the obtained product is not storage stable and undergoes phase separation. In addition, the production method includes an additional blending step.

In addition, commonly used halogenated organic flame retardants are usually used in combination with antimony trioxide, which acts as a synergist and boosts their flame retardant properties. However, the use of antimony trioxide (as well as halogenated materials) is undesirable for environmental and health reasons and requires complex suspension protocols.

Thus, there is still need in the art for water-based flame retardant adhesives and coating compositions that are sustainable, non-toxic, storage stable, and easily producible.

The present invention meets this need and provides a stable flame retardant water-based polymer dispersion for use in adhesive and coating compositions. The invention is based on the inventors' surprising finding that the afore-mentioned technical problems can be overcome by producing a water-based acrylic polymer dispersion comprising a hydrophobic flame retardant by emulsion polymerization of a monomer mixture comprising (meth)acrylate monomers and the hydrophobic flame retardant. Using such a process, the flame retardant is incorporated into the polymer matrix and additional steps of blending the flame retardant into the latex are no longer necessary. In addition, said process provides for an optimal distribution of the flame retardant in the latex particles, so that the amount of flame retardant needed for the same flame retardant effect can be significantly reduced. By careful selection of the flame retardant the tackiness of the resulting adhesive as well as its adhesion properties for various substrates can be positively influenced. The invented process thus provides for significant cost reduction due to less amounts of flame retardant, less environmental and safety measures in processing and manufacture of the dispersions necessary, and reduction of the number of process steps, while being more versatile, simpler, and easier to upscale. The thus produced dispersions are advantageous with respect to adhesive properties and stability and show good mechanical properties even after extended periods of storage.

In a first aspect, the present invention thus relates to a method for producing an aqueous dispersion of polymeric particles comprising an acrylic polymer and a hydrophobic flame retardant, the method comprising
(1) emulsifying a reaction mixture comprising (meth)acrylate monomers, at least one hydrophobic flame retardant, and optionally at least one stabilizer in a continuous aqueous phase to form an aqueous emulsion of droplets comprising the (meth)acrylate monomers, the at least one hydrophobic flame retardant, and optionally the at least one stabilizer; and
(2) polymerizing the aqueous emulsion to form an aqueous dispersion of polymeric particles comprising an acrylic polymer and a hydrophobic flame retardant.

In another aspect, the invention relates to an aqueous dispersion obtainable according to a method described herein.

In a further aspect, the present invention is directed to an adhesive or coating composition comprising an aqueous dispersion described herein.

Finally, in another aspect, the present invention relates to the use of an aqueous dispersion according to the present invention in an adhesive or coating composition.

In the following, the invention is described in greater detail. It is however understood that the present invention is not limited to the below embodiments, but can easily be adapted to use other monomers, stabilizers, surfactants, and polymerization initiators. Such alternative embodiments are also encompassed by the scope of the instant invention.

"At least one" means one or more, i.e. 1, 2, 3, 4, 5, 6, 7, 8, 9, or more. "At least one", as used herein in relation to any component, refers to the number of chemically different molecules, i.e. to the number of different types of the referenced species, but not to the total number of molecules. For example, "at least one acrylate" means that at least one type of molecule falling within the definition for an acrylate is used but that also two or more different molecule types falling within this definition can be present, but does not mean that only one molecule of said acrylate is present.

If reference is made herein to a molecular weight, this reference refers to the number average molecular weight Mₙ, if not explicitly stated otherwise. The number average molecular weight Mₙ can be determined by gel permeation chromatography according to DIN 55672-1:2007-08 with THF as the eluent, preferably at 35°C. For calibration, polymethylmethacrylate standards are used to determine the apparent molecular weights. If not stated otherwise, all given molecular weights are those determined GPC. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

The terms "(meth)acrylate" and "(meth)acrylic acid", as used herein, refer to methacrylates or acrylates and methacrylic acid or acrylic acid, respectively.

In various embodiments, the (meth)acrylate monomers comprise a monomer mixture comprising:
(a) at least one (meth)acrylic acid C₁₋₈ alkyl ester monomer, preferably in an amount of 50 to 90 wt.-%, preferably 75 to 85 wt.-% relative to the monomer mixture; and
(b) at least one (meth)acrylic acid monomer, preferably in an amount of 10 to 50 wt.-%, preferably 15 to 25 wt.-% relative to the monomer mixture.

In various embodiments, the at least one (meth)acrylic acid C₁₋₈ alkyl ester monomer is selected from the group consisting of methyl(meth)acrylate, ethyl(meth)acrylate, n-butyl(meth)acrylate, n-hexyl(meth)acrylate, 2-ethylhexyl(meth)acrylate, n-octyl(meth)acrylate, and combinations thereof. While combinations of at least two (meth)acrylic acid C₁₋₈ alkyl ester monomers are preferred, embodiments where only one monomer is used are also contemplated herein. In a preferred embodiment, such a combination comprises as a first monomer a methacrylic acid C₁-C₈ alkyl ester monomer, preferably a methacrylic acid C₁-C₃ alkyl ester monomer, more preferably a methacrylic acid methyl ester monomer; and/or as a second monomer an acrylic acid C₂-C₈ alkyl ester monomer, preferably an acrylic acid C₃-C₅ alkyl ester monomer, more preferably an acrylic acid butyl ester monomer or an acrylic acid 2-ethylhexyl ester monomer.

In a particularly preferred embodiment, the combination of at least two (meth)acrylic acid C₁₋₈ alkyl ester monomers comprises or consists of a mixture of methyl methacrylate and butyl acrylate or 2-ethylhexylacrylate. Such mixture can advantageously replace the commonly used ethyl acrylate, which is less desirable due to its low odor threshold. In such a mixture, the butyl acrylate or the 2-ethylhexyl acrylate lowers the glass transition temperature and maintains emulsion droplet stability due to its higher hydrophobicity compared to other monomers employed.

In the above described mixtures, the weight ratio of the first to the second ethylenically unsaturated (meth)acrylic acid C₁-C₈ alkyl ester monomer, in particular of the methyl methacrylate to the butyl acrylate or 2-ethylhexyl acrylate, may be in the range of 1:10 to 10:1, preferably 1:8 to 5:1, more preferably 1:3 to 1:7 and most preferably 1:4 to 1:6. This ratio ensures a good emulsion droplet stability.

In various embodiments, the at least one (meth)acrylic acid monomer is methacrylic acid (MAA). Also contemplated are the respective salts thereof, i.e. the salts of the listed acids with any suitable cation, preferably metal cation, such as, without limitation sodium and potassium, or ammonium.

In various embodiments, any of the above esters may comprise one or more functional groups in the alkyl moiety provided that the functional groups do not react with each other under the reaction conditions described herein. Exemplary compounds include those that comprise amino, hydroxyl or N-methylol groups in the alcohol chain, such as hydroxyethyl (meth)acrylate, hydroxypropyl (meth)acrylate, hydroxybutyl (meth)acrylate and the like. The amount of these functionalized compounds should however preferably be below 15 wt.-% relative to the total amount of these esters.

In preferred embodiments, the at least one (meth)acrylic acid monomer is methacrylic acid (MAA), and the at least one (meth)acrylic acid C₁-C₈ alkyl ester monomer is selected from the group consisting of methyl methacrylate (MMA), butyl acrylate (BA), 2-ethylhexyl acrylate (2-EHA) and mixtures thereof, preferably mixtures of MMA and BA or MMA and 2-EHA. In various embodiments, the monomer mixture comprises MAA, MMA and BA, preferably, in amounts of 10-25 wt.-% MAA, 60-80 wt.-% BA and 10-15 wt.-% MMA.

In addition to the above-listed monomers, the monomer mixture may further comprise other monomers, for example styrene monomers and/or monomers comprising siloxane groups, such as, without limitation, vinyl trimethoxy silanes, alkylvinyl dialkoxy silanes or (meth)acryloxyalkyl trialkoxy silanes. Concrete examples include, without limitation, (meth)acryloxyethyl trimethoxy silane and (meth)acryloxypropyl trimethoxy silane. Also suitable are polysiloxane macromonomers having a number average molecular weight Mₙ of 1000 to 40000 and comprising 0.5 to 2.5 ethylenically unsaturated double bonds per molecule. Preferred compounds are those that have a number average molecular weight Mₙ of 2000 to 20000, preferably 2500 to 10000, more preferably 3000 to 7000, and comprise 0.5 to 2.5, preferably 0.5 to 1.5 ethylenically unsaturated double bonds per molecule. Such compounds are for example disclosed on pages 5-7 of DE 38 07 571 A1, columns 3-7 of DE 37 06 095 A1, pages 3-6 of EP 0358153 B1, columns 5-9 of US 4,754,014 A1, in DE 44 21 823 A1 or on pages 12-18 of WO 92/22615. The number average molecular weight Mₙ can be determined according to the above-described method.

Other suitable monomers include polyunsaturated monomers that can act as crosslinkers. If present, such polyunsaturated monomers are only present in comparably small amounts, i.e. typically up to 5 wt.-%, preferably up to 3 wt.-% relative to the total weight of the monomer mixture. Preferred are monomers that contain two vinyl groups. Exemplary compounds that are suitable as crosslinking monomers include, without limitation, diallyl phthalates, diallyl maleinate, triallyl cyanurate, tetraallyl oxyethane, divinyl benzene, allyl acrylate, allyl methacrylate, vinyl crotonate, butanediol-1,4-dimethacrylate, triethyleneglycol dimethacrylate, divinyl adipate and combinations thereof.

All afore-described percentages relate, if not otherwise indicated, to the total number of monomers present in the monomer mixture and optionally add up to 100 wt.-%.

In general, the at least one hydrophobic flame retardant may be any hydrophobic flame retardant known in the art, which is suitable for the purpose of the present invention. In a preferred embodiment, the at least one hydrophobic flame retardant is a liquid type flame retardant. In a preferred embodiment, the at least one hydrophobic flame retardant is selected from the group consisting of organohalogen flame retardants, organophosphorus flame retardants, and mixtures thereof. More preferably, the flame retardant is selected from the group consisting of organochlorines, organobromines such as 1,2-di-[2-ethylhexylcarboxylate]-3,4,5,6-tetrabromobenzene, which is commercially available under the trademark DP-45® from Great Lakes, decabromodiphenyl ether (decaBDE), decabromodiphenyl ethane, which is a replacement for decaBDE, polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD), non-halogenated organophosphorus flame retardants such as diphenyl tolyl phosphate, which is commercially available under the trademark Disflamoll DPK® from Lanxess, triphenyl phosphate (TPP), resorcinol bis(diphenylphosphate) (RDP), bisphenol A diphenyl phosphate (BADP), tricresyl phosphate (TCP), trimethyl phosphate (TMP), triethyl phosphate (TEP), trixylenyl phosphate (TXP), and cresyl diphenyl phosphate (CDP), aromatic polyphosphates such as those available from Daihatsu Chemical under the tradenames CR733S and CR741, aliphatic polyphosphates, aliphatic polyphosphonates phosphates such as those available from Daihatsu Chemical under the tradenames DAIGUARD-580, -610 and -880, phosphonates such as dimethyl methylphosphonate (DMMP), phosphinates such as aluminum diethyl phosphinate, halogenated organophosphorus compounds such as brominated organophosphorus compounds, preferably tris(2,3-dibromopropyl) phosphate, and chlorinated organophosphorus compounds, preferably tris(chloropropyl)phosphate (TMCPP), tris(1,3-dichloro-2-propyl)phosphate (TDCPP) and tetrekis(2-chlorethyl)dichloroisopentyldiphosphate, and combinations thereof. Alternatively, the phosphorouscontaining flame retardant commercially available under the trademark Emerald Innovation NH-1® from Great Lakes may be used. In preferred embodiments, the flame retardants do not include heavy metals, in particular antimony. In various other embodiments, the flame retardants used are halogenfree.
In a preferred embodiment, the at least one hydrophobic flame retardant is selected from organobromines, preferably selected from 1,2-di-[2-ethylhexylcarboxylate]-3,4,5,6-tetrabromobenzene, which is commercially available under the trademark DP-45®from Great Lakes, decabromodiphenyl ether (decaBDE), decabromodiphenyl ethane, polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane, or organophosphorus flame retardants, preferably non-halogenated organophosphorus flame retardants, preferably selected from diphenyl tolyl phosphate, which is commercially available under the trademark Disflamoll DPK® from Lanxess, triphenyl phosphate (TPP), resorcinol bis(diphenylphosphate) (RDP), bisphenol A diphenyl phosphate (BADP), tricresyl phosphate (TCP), trimethyl phosphate (TMP), triethyl phosphate (TEP), trixylenyl phosphate (TXP), and cresyl diphenyl phosphate (CDP), or those commercially available under the trademark Emerald Innovation NH-1® from Great Lakes, or aromatic polyphosphates, preferably selected from those available from Daihatsu Chemical under the tradenames CR733S and CR741.

In a more preferred embodiment, the at least one hydrophobic flame retardant is selected from non-halogenated organophosphorus flame retardants, preferably selected from diphenyl tolyl phosphate, triphenyl phosphate, resorcinol bis(diphenylphosphate), bisphenol A diphenyl phosphate, tricresyl phosphate, trimethyl phosphate, triethyl phosphate, trixylenyl phosphate, cresyl diphenyl phosphate, or aromatic polyphosphates. In a most preferred embodiment, the at least one hydrophobic flame retardant is selected from aromatic polyphosphates.

In various embodiments, the flame retardant is contained in the aqueous dispersion in an amount of 2 to 25 wt.-%, preferably 5 wt.-% to 20 wt.-%, and more preferably 10 wt.-% to 15 wt.-% based on the total weight of the solid content aqueous dispersion.

The reaction mixture may further comprise at least one stabilizer. The term "stabilizer", as used herein, relates to a class of molecules that can stabilize the droplets in a dispersion or emulsion, i.e. prevent coagulation or coalescence. The stabilizer molecules may adhere to or associate with the droplet surface. Furthermore, the stabilizer may covalently react with the monomers upon polymerization. In various embodiments the stabilizer molecules comprise a hydrophilic and a hydrophobic part, with the hydrophobic part interacting with the droplet and the hydrophilic part be exposed to the solvent. The stabilizers may be surfactants and may bear an electric charge, for example may be anionic or cationic surfactants or may, alternatively, be non-ionic.

An exemplary stabilizer that can be used in accordance with the present invention is sodium dodecyl sulfate (SDS).

Other anionic surfactants useful as stabilizers in accordance with the present invention are compounds of the general formula 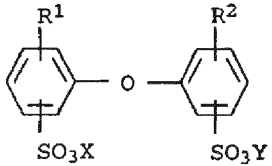 wherein R¹ and R² are independently hydrogen or C₄-C₂₄ alkyl provided that not both are hydrogen, and X and Y represent alkali metal ions or ammonium ions. R¹ and R² are preferably linear or branched alkyl with 6 to 18 carbon atoms or hydrogen, in particular alkyl with 6, 12 or 16 carbon atoms. X and Y are preferably sodium, potassium, ammonium, with sodium being particularly preferred. Preferred compounds are those wherein X and Y are sodium, R¹ is a branched alkyl group with 12 carbon atoms and R² is hydrogen or the same as R¹. Typically, technical mixtures are used that comprise 50 to 90 wt.-% of the monoalkylated product, such as Dowfax® 2A1 (Dow Chemical Company). Such compounds are widely known, for example from US-A 4,269,749, and are commercially available.

Still other suitable stabilizers are copolymerizable stabilizers, for example those of formula H₂C=CHCH₂-O-CH₂-CHR'-O-(CH₂CH₂O)ₘ-X, wherein R' is -CH₂-O-C₉₋₁₅ alkyl, m is 3-50, preferably 5-40, more preferably 5-25, still more preferably 5-20, most preferably 5-15, and X is SO₃Na or SO₃NH₄. Such compounds are for example described in WO 2010/026065 and are commercially available, for example as SR-10 from ADEKA.

Alternative stabilizers/surfactants that may also be used according to the invention are known to those skilled in the art and include for example known surfactants or hydrophobically modified polar polymers.

Particularly preferred in the methods of the invention are surfactants, in particular anionic and/or nonionic surfactants, preferably fatty alcohol alkoxylates and fatty alcohol ether sulfates. In various embodiments, a combination of at least one nonionic surfactant, preferably a fatty alcohol polyglycol ether, and at least one anionic surfactant, preferably a fatty alcohol polyglycol ether sulfate is used. These can, for example, be used in a weight ratio of 15:1 to 5:1.

In various embodiments, the reaction mixtures described herein can further comprise other protective colloids, such as polyvinyl alcohols, in particular hydrophobically modified polyvinyl alcohols, cellulose derivatives or vinyl pyrrolidone. A more detailed description of suitable compounds can, for example, be found in Houben-Weyl, Methoden der Organischen Chemie, Bd. 14/1, Makromolekulare Stoffe, Georg-Thieme-Verlag, Stuttgart, 1961, pages 411-420.

The total amount of stabilizers/surfactants in the reaction mixture is typically in the range of 1 wt.-% to 30 wt.-%, preferably 5 to 15 wt.-%, more preferably 7 to 12 wt.-%, relative to the total weight of the reaction mixture. The total amount of the stabilizer/surfactant in the polymer system is preferably in the range of 1 to 30 wt.-%, preferably 5 to 15 wt.-%, more preferably 7 to 12 wt.-%, based on the solid content of the dispersion. These stabilizer/surfactant concentrations ensure emulsion stability and the appropriate droplet size.

The reaction mixture may further comprise at least one chain transfer agent. In general, the used chain transfer agent may be any chain transfer agent known in the art, which is suitable for the purpose of the present invention. For example, thiols, such as lauryl mercaptan, may be used as chain transfer agents. The chain transfer agent may preferably be comprised in an amount of up to 3 wt.-%, preferably 0.1 to 3 wt.-%, more preferably 0.1 to 1.5 wt.-% relative to the reaction mixture.

In step (1) of the methods of the invention, the acrylic monomers and the at least one hydrophobic flame retardant as well as optionally contained stabilizers, chain transfer agents or other additives present in the reaction mixture are emulsified in a continuous aqueous phase to form an aqueous emulsion. "Aqueous phase", as used herein, refers to a phase with water as main component. Preferably, the aqueous phase is water. In various embodiments, the aqueous phase may be premixed with the stabilizer so that the reaction mixture comprising the acrylic monomers and the at least one hydrophobic flame retardant as well as optionally contained chain transfer agents and other additives is emulsified into the aqueous phase already containing the stabilizer.

In general, this step can be conducted in any appropriate emulsifying apparatus known in the art, which is suitable for the purpose of the present invention. For example, said apparatus can be a vessel or a jacked reactor equipped with a stirring device, such as a mechanical stirrer. In various embodiments, the mixture may be heated, for example to a temperature of 40 to 70 °C, preferably 50 and 60 °C. The emulsifying in step (1) is preferably carried out with a high shear process. The shear rates are preferably between 1,000 rpm and 50,000 rpm, more preferably between 5,000 rpm and 25,000 rpm, and even more preferably at 10,000 rpm, preferably between 0.1 min and 10 min, more preferably 0.5 min and 5 min, and even more preferably for 1 min.

The term "emulsion", as used herein, generally relates to oil-in-water (O/W) emulsions, i.e. emulsions in which water is used in excess and is the continuous medium.

The droplets formed in the emulsification step typically have a size between 100 nm and 3000 nm, preferably between 150 nm and 1000 nm, and more preferably between 200 nm and 300 nm, as determined by dynamic light scattering (DLS) according to ISO 22412.

The obtained aqueous emulsion is subsequently polymerized in step (2). In order to polymerize said emulsion, any technique and compounds known in the art and suitable for emulsion polymerization may be used. Commonly, polymerization initiators are used. Readily usable initiators may be thermally activatable or redox activatable. For initiation of polymerization preferably thermally activatable initiators are used. Suitable initiators are widely known in the art and readily available and include organic azo or peroxo compounds. The initiators are preferably water-soluble. When the polymerization is initiated by water-soluble initiator, free radicals are generated in aqueous phase first and diffuse to water/prepolymer interface to initiate the polymerization inside droplets. Exemplary initiators used herein include potassium peroxodisulfate (KPS), sodium peroxodisulfate (SPS), 2,2'-azobis(2-methylbutyronitrile) (V-59), and 2,2'-azobis(2-methylpropionitrile) (AIBN). "Thermally activatable polymerization initiator", as used herein, relates to compounds, which are stable at room temperature, but initiate a polymerization reaction at elevated temperature, commonly due to decomposition and thereby generating radical decomposition fragments. To facilitate polymerization, the temperature of step (2) may be adjusted to be between 70 °C and 97 °C, preferably between 75 °C and 95 °C, more preferably between 78 °C and 90 °C, and even more preferably between 82 °C and 87 °C. The reaction time of step (2) is between 1 hour and 4 hours, preferably between 2 hours and 4 hours, and more preferably between 3 hours and 4 hours. Preferably, step (2) of the method described herein is conducted at a pH value (20 °C) between 0 and 8, more preferably between 1 and 7.5, and even more preferably between 2 and 7.

In addition to the above described steps, further steps may be carried out in order to achieve the desired properties of the obtained dispersion. In a preferred embodiment, step (2) further includes a postpolymerization step. For this purpose, polymerization initiators, preferably different from those used for polymerization initiation, can be used. Readily usable initiators are redox activatable initiators, such as peroxides and sulfonates, in particular tert-butylhydroperoxide and sodium hydroxymethanesulfinate. Optionally, the postpolymerization is also conducted at elevated temperatures, as those indicated above. The reaction time for step (2) given above may include said postpolymerization step.

In various embodiments, a thickener may be added to the obtained aqueous dispersion in order to adjust the viscosity. Preferably, the adjusted viscosity is between 200 mPas and 2000 mPas, as determined by a Brookfield viscosimeter, spindle 4, 100 rpm at 20°C. Suitable viscosity adjusting and thickening agents are well-known in the art.

In a preferred embodiment of the present invention, the method is a one-pot synthesis.

The thus obtained aqueous dispersions also form part of the present invention. The flame retardant is uniformly distributed in the obtained polymeric particles and thus provides for improved flame retardant properties. A less amount of flame retardant is needed in order to achieve the same flame retardant effect of commonly known products, thus reducing production costs. In addition, the dispersion can be formulated free of halogens and compounds containing heavy metals. The production steps are kept to a minimum and the products are thus easy accessible. Further, the method and dispersion disclosed herein are moreover sustainable, as no VOCs are used and no heavy metal containing flame retardants are needed. The flame retardant can be selected such that the obtained dispersion is tacky and provides homogeneous film formation. The adhesives and coating compositions show good mechanical properties also after a long period of time.

The term "particle", as used herein, refers to a particle of any shape, but preferably of roughly spherical shape, Preferably, the particle size is between 50 nm and 1000 nm, more preferably between 100 nm and 500 nm, and even more preferably between 200 nm and 300 nm, as determined by dynamic light scattering (DLS).

The resulting aqueous dispersion preferably has a solid content of 35 to 70 wt.-%, preferably 40 to 65 wt.-%, more preferably 45 to 60 wt.-%, relative to the total weight of the aqueous dispersion.

Adhesives and coating systems and compositions comprising the aqueous dispersion form another part of the present invention.

The aqueous dispersion may directly be used as an adhesive or coating or may be blended with other components to form such an adhesive or coating composition, in particular coatings for waterproofing applications, especially outdoor protection of building materials, including but not limited to wood and concrete. Such adhesive or coating compositions can contain further ingredients all of which are well-known in the field. It is however preferred that neither the dispersions nor the final compositions containing the dispersions contain organic solvents. In a various embodiment, the dispersions and/or compositions are thus essentially free of organic solvents. "Essentially free", as used in this context, means that the dispersion and/or composition contains less than 5 wt.-% of the given component, preferably less than 2 wt.-%, more preferably less than 1 wt.-%.

The coatings can be applied to the substrate by all known techniques, including without limitation, spraying, painting, dip-coating, spin-coating, printing and the like.

It is understood that all embodiments disclosed herein in relation to the methods are similarly applicable to the disclosed dispersions, compositions, and uses and vice versa.

The following examples are given to illustrate the present invention. Because these examples are given for illustrative purposes only, the invention should not be deemed limited thereto.

### Examples

### Example 1: Flame retardant dispersion with bromine

### Reactor charge

| | |
|---|---|
| Demineralized water | 863.26 g (47.96 mol) |
| Disponil AFX 4030 (ethoxylated polyol blend, non-ionic surfactant) (water-based solution of a modified fatty alcohol glycol ether) | 120.69 g |
| Disponil FES 32 (fatty alcohol polyglycol ether sulphate, Na-salt) | 11.30 g |

### Heat up to 85 °C.

### Monomer mixture

| | |
|---|---|
| butyl prop-2-enoate (butyl acrylate) | 504.78 g (3.95 mol) |
| methyl-2-methylprop-2-enoate (methyl methacrylate) | 95.93 g (0.96 mol) |
| 2-methylpropenoic acid (methacrylic acid) | 147.04 g (1.71 mol) |
| 1-Dodecanethiol (lauryl mercaptan) | 6.67 g (0.03 mol) |
| Great Lakes DP 45 (1,2-di-[2-ethylhexylcarboxylate]-3,4,5,6-tetrabromobenzene) | 202.5 g (0.29 mol) |

### Dosage: 7.6 ml/min

### Initiator (add at the start)

| | |
|---|---|
| sodium peroxodisulfate | 1.67 g (0.0007 mol) |
| Postreaction (add) 2-methylpropane-2-peroxol (tert-butylhydroxyperoxide) (70 % solution) | 0.21 g (0.002 mol) |
| Postreaction (dosage) 2 % sodium hydroxymethanesulfinate solution (Rongalit C) | 41.72 g (0.0007 mol) |
| Total: | 1995.77 g |

### Characteristics

| | |
|---|---|
| Solid content: | 40.2 % |
| pH-value (20 °C): | 2.7 |
| Viscosity (Brookfield, spindle 4, 100 rpm): | 24 mPas |

### Example 2: Flame retardant dispersion with phosphorous

### Reactor charge

| | |
|---|---|
| Demineralized water | 815.62 g (45.31 mol) |
| Disponil AFX 4030 (ethoxylated polyol blend, non-ionic surfactant) (water-based solution of a modified fatty alcohol glycol ether) | 114.36 g |
| Disponil FES 32 (fatty alcohol polyglycol ether sulphate, Na-salt) | 10.67 g |

### Heat up to 85 °C.

### Monomer mixture

| | |
|---|---|
| butyl prop-2-enoate (butylacrylate) | 476.91 g (3.72 mol) |
| methyl-2-methylprop-2-enoate (methyl methacrylate) | 90,64 g (0.91 mol) |
| 2-methylpropenoic acid (methacrylic acid) | 138.92 g (1.61 mol) |
| 1-Dodecanethiol (lauryl mercaptan) | 6.30 g (0.03 mol) |
| Emerald Innovation NH-1 (Phosphorous-mixture) | 300.72 g |

### Dosage: 7.6 ml/min

### Initiator (add at the start)

| | |
|---|---|
| sodium peroxodisulfate | 1.58 g (0.0007 mol) |
| Postreaction (add) | |
| 2-methylpropane-2-peroxol (tert-butylhydroxylperoxide) (70 % solution) | 0.30 g (0.002 mol) |
| Postreaction (dosage) | 39.42 g (0.0007 mol) |
| 2 % sodium hydroxymethanesulfinate solution (Rongalit C) | |
| Total: | 1995.44 g |

### Characteristics

| | |
|---|---|
| Solid content: | 49.7 % |
| pH-value (20 °C): | 2.1 |
| Viscosity (Brookfield, spindle 4, 100 rpm): | 34 mPas |

### Example 3: Flame retardant dispersion with phosphorous

### Reactor charge

| | |
|---|---|
| Demineralized water | 815.62 g (45.31 mol) |
| Disponil AFX 4030 (ethoxylated polyol blend, non-ionic surfactant) (water-based solution of a modified fatty alcohol glycol ether) | 114.36 g |
| Disponil FES 32 (fatty alcohol polyglycol ether sulphate, Na-salt) | 10.67 g |

### Heat up to 85 °C.

### Monomer mixture

| | |
|---|---|
| butyl prop-2-enoate (butyl acrylate) | 476.91 g (3.72 mol) |
| methyl-2-methylprop-2-enoate (methyl methacrylate) | 90.64 g (0.91 mol) |
| 2-methylpropenoic acid (methacrylic acid) | 138.92 g (1.61 mol) |
| 1-Dodecanethiol (lauryl mercaptan) | 6.30 g (0.03 mol) |
| Disflamoll DPK (Diphenyltolylphosphate) | 300.72 g |

### Dosage: 7.6 ml/min

### Initiator (add at the start)

| | |
|---|---|
| sodium peroxodisulfate | 1.58 g (0.0007 mol) |
| Postreaction (add) | |
| 2-methylpropane-2-peroxol (tert-butylhydroxylperoxide) (70 % solution) | 0.30 g (0.002 mol) |
| Postreaction (dosage) 2 % sodium hydroxymethanesulfinate solution (Rongalit C) | 39.42 g (0.0007 mol) |
| Total: | 1995.44 g |

Characteristics

| | |
|---|---|
| Solid content: | 52.1 % |
| pH-value (20 °C): | 2.0 |
| Viscosity (Brookfield, spindle 4, 100 rpm): | 50 mPas |

### Example 4: Flame retardant dispersion with bromine

### Reactor charge

| | |
|---|---|
| Demineralized water | 863.26 g (47.96 mol) |
| Disponil AFX 4030 (ethoxylated polyol blend, non-ionic surfactant) (water-based solution of a modified fatty alcohol glycol ether) | 120.69 g |
| Disponil FES 32 (fatty alcohol polyglycol ether sulphate, Na-salt) | 11.30 g |

### Heat up to 85 °C.

### Monomer mixture

| | |
|---|---|
| butyl prop-2-enoate (butyl acrylate) | 511.00 g (3.98 mol) |
| 2-methylpropenoic acid (methyacrylic acid) | 139.00 g (1.61 mol) |
| 1-Dodecanethiol (lauryl mercaptan) | 6.70 g (0.033 mol) |
| Great Lakes DP 45 (1,2-di-[2-ethylhexylcarboxylate]-3,4,5,6-tetrabromobenzene) | 300.00 g (0.43 mol) |

### Dosage: 7.6 ml/min

### Initiator (add at the start)

| | |
|---|---|
| sodium peroxodisulfate | 1.67 g (0.0007 mol) |
| Postreaction (add) 2-methylpropane-2-peroxol (tert-butylhydroxylperoxide) (70 % solution) | 0.21 g (0.002 mol) |
| Postreaction (dosage) 2 % sodium hydroxymethanesulfinate solution (Rongalit C) | 41.72 g (0.0007 mol) |
| Total: | 1995.55 g |

### Characteristics

| | |
|---|---|
| Solid content: | 40.2 % |
| pH-value (20 °C): | 2.7 |
| Viscosity (Brookfield, spindle 4, 100 rpm): | 24 mPas |

### Example 5: Flame retardant dispersion with two phosphorous compounds

### Reactor charge

| | |
|---|---|
| Demineralized water | 935 g |
| Disponil AFX 4030 (ethoxylated polyol blend, non-ionic surfactant) (water-based solution of a modified fatty alcohol glycol ether) | 114.36 g |
| Disponil FES 32 (fatty alcohol polyglycol ether sulphate, Na-salt) | 10.67 g |

### Heat up to 85 °C.

### Monomer mixture

| | |
|---|---|
| butyl prop-2-enoate (butyl acrylate) | 476.91 g (3.72 mol) |
| methyl-2-methylprop-2-enoate (methyl methacrylate) | 90.64 g (0.91 mol) |
| 2-methylpropenoic acid (methacrylic acid) | 138.92 g (1.61 mol) |
| 1-Dodecanethiol (lauryl mercaptan) | 6.30 g (0.03 mol) |
| CR-733S | 150.00 g |

| | |
|---|---|
| Disflamoll DPK | 150.00 g |
| Dosage: 7.6 ml/min | |
| Initiator (feed continuously) | |
| sodium peroxodisulfate | 1.6 g (0.0007 mol) |
| Total: | 2075 g |

### Characteristics

| | |
|---|---|
| Solid content: | 52.4% |
| pH-value (20 °C): | 2.8 |
| Viscosity (Brookfield, spindle 4, 100 rpm): | 32 mPas |

### Example 6: Flame retardant dispersion with two phosphorous compounds

### Reactor charge

| | |
|---|---|
| Demineralized water | 900 g |
| Disponil AFX 4030 (ethoxylated polyol blend, non-ionic surfactant) (water-based solution of a modified fatty alcohol glycol ether) | 114.36 g |
| Disponil FES 32 (fatty alcohol polyglycol ether sulphate, Na-salt) | 10.67 g |

### Heat up to 85 °C.

### Monomer mixture

| | |
|---|---|
| butyl prop-2-enoate (butyl acrylate) | 476.91 g (3.72 mol) |
| methyl-2-methylprop-2-enoate (methyl methacrylate) | 90.64 g (0.91 mol) |
| 2-methylpropenoic acid (methacrylic acid) | 138.92 g (1.61 mol) |
| 1-Dodecanethiol (lauryl mercaptan) | 6.30 g (0.03 mol) |
| CR-741 | 150.00 g |
| Disflamoll DPK | 150.00 g |

### Dosage: 7.6 ml/min

### Initiator (feed continuously)

| | |
|---|---|
| sodium peroxodisulfate | 1.6 g (0.0007 mol) |
| Total: | 2040 g |

### Characteristics

| | |
|---|---|
| Solid content: | 53.3% |
| pH-value (20 °C): | 2.8 |
| Viscosity (Brookfield, spindle 4, 100 rpm): | 40 mPas |

### Example 7: Stability tests

Table 1 presents the comparison of the stability of two processes. The dispersions according to Examples 2 to 6 have been produced as described above by using a high shear device UL-TRATURAX at 10,000 rpm during 1 minute. In parallel, the dispersions according to Comparative Examples 2 to 4 have been produced by normal blending of pure polyacrylates compositions and same flame retardant agents using a high shear device UL-TRATURAX at 10,000 rpm for one 1 minute, while keeping the same quantities and dispersions quality as described in Example 2 to 4. The particle size and particle size distribution were measured by DLS dynamic light scattering Malvern equipment.

**Table 1. Dynamic light scattering measurements**

| Sample | Process | F.R. [wt.-%] | After 2 weeks at 50 °C | After 6 months |
|---|---|---|---|---|
| Example 2 | One pot | Emerald Innovation NH-1 (15 wt.-%) | Stable, particle size around 240 nm | Stable, particle size around 240 nm |
| Comparative Example 2 | Blending | Emerald Innovation NH-1 (15 wt.-%) | Phase separation | Phase separation |
| Example 3 | One pot | Disflamoll DPK (15 wt.-%) | Stable, particle size around 210 nm | Stable, particle size around 210 nm |
| Comparative Example 3 | Blending | Disflamoll DPK (15 wt.-%) | Phase separation | Phase separation |
| Example 4 | One pot | DP 45 (15 wt.-%) | Stable, particle size around 300 nm | Stable, particle size around 300 nm |
| Comparative Example 4 | Blending | DP 45 (15 wt.-%) | Phase separation | Phase separation |
| Example 5 | One pot | Disflamoll DPK (7.2 wt.-%) and CR-733S (7.2 wt.-%) | Stable, Particle size around 125 nm, PDI 0.088 | - |
| Example 6 | One pot | Disflamoll DPK (7.35 wt.-%) and CR-741 (7.35 wt.-%) | Stable, Particle size around 120 nm, PDI 0.103 | - |

F.R. is flame retardant; Emerald Innovation NH-1® is a commercially available mixture comprising organophosphate and aryl phosphate; Disflamoll DPK® is diphenyl tolyl phosphate; and DP-45® is 1,2-di-[2-ethylhexylcarboxylate]-3,4,5,6-tetrabromobenzene.

The water-based adhesive compositions described in Examples 2, 3, 5, and 6 were evaluated in terms of tensile shear strength using Instron® Universal Testing Machine 3166 at the speed of 1 mm/sec (Table 2). Three samples of each experiment were prepared and analysed. The materials bonded were uncoated PET 3 MIL MYLAR films. Aging tests were performed at a temperature of 55 °C and 100 % humidity during 24 h (Table 3).

**Table 2. Tensile strength measurements immediately after application on substrates.**

| Example | F.R. [wt.-%] | Type F.R. | Wetting agent [1 wt.-%] | Maximum force [N] (avg.) | Extensions at tension [mm] (avg.) | Extensions at rupture [mm] (avg.) |
|---|---|---|---|---|---|---|
| Example 2 | Emerald Innovation NH-1 (15 wt.-%) | Phosphate based | BYK 3455 | 58.80 | 3.28 | 1.33 |
| Example 3 | Disflamoll DPK (15 wt.-%) | Phosphate based | BYK 347 | 111.03 | 3.21 | 1.17 |
| Example 5 | Disflamoll DPK (7.2 wt.-%) and CR-733S (7.2 wt.-%) | Phosphate based | none | 143.5 | 6.00 | 4.00 |
| Example 6 | Disflamoll DPK (7.35 wt.-%) and CR-741 (7.35 wt.-%) | Phosphate based | none | 50.75 | 0.3 | 0.10 |

**Table 3. Tensile strength measurements after aging test.**

| Example | F.R. [wt.-%] | Type F.R. | Wetting agent [1 wt.-%] | Maximum force [N] (avg.) | Extensions at tension [mm] (avg.) | Extensions at rupture [mm] (avg.) |
|---|---|---|---|---|---|---|
| Example 2 | Emerald Innovation NH-1 (15 wt.-%) | Phosphate based | BYK 3455 | 41.54 | 7.31 | 5.5 |
| Example 3 | Disflamoll DPK (15 wt.-%) | Phosphate based | BYK 347 | 31.63 | 5.59 | 5.33 |
| Example 5 | Disflamoll DPK (7.2 wt.-%) and CR-733S (7.2 wt.-%) | Phosphate based | none | 130.70 | 5.2 | 3.25 |
| Example 6 | Disflamoll DPK (7.35 wt.-%) and CR-741 (7.35 wt.-%) | Phosphate based | none | 140 | 3.60 | 2.60 |

### Flammability test

The dispersion was applied to a metallized PET film, dried for 1 to 2 minutes at 80 °C and then an uncoated Mylar 2 mil film was applied to the adhesive layer. The sample was measured by German DIN 4102 (B1) flammability testing standards, according to which a material is classified as B1 if it it fulfils the requirements of a B2-test. The specimen is put on a specimen holder that is hung in a test cabinet. A burner flame is applied to it for 15 seconds. The time to reach a marked point is measured. The data are shown in Table 4.

**Table 4. B2 flammability results**

| Sample | Test type | Results |
|---|---|---|
| Example 2 | B2 test | Pass |
| Example 3 | B2 test | Pass |
| Example 4 | B2 test | Pass |
| Example 5 | B2 test | Pass |
| Example 6 | B2 test | Pass |

## Claims

1. Method for producing an aqueous dispersion of polymeric particles comprising an acrylic polymer and a hydrophobic flame retardant, the method comprising
(1) emulsifying a reaction mixture comprising (meth)acrylate monomers, at least one hydrophobic flame retardant, and optionally at least one stabilizer in a continuous aqueous phase to form an aqueous emulsion of droplets comprising the (meth)acrylate monomers, the at least one hydrophobic flame retardant, and optionally the at least one stabilizer; and
(2) polymerizing the aqueous emulsion to form an aqueous dispersion of polymeric particles comprising an acrylic polymer and a hydrophobic flame retardant.

2. Method according to claim 1, wherein the method is a one-pot synthesis.

3. Method according to claim 1 or 2, wherein the (meth)acrylate monomers comprise a monomer mixture comprising:
(a) at least one (meth)acrylic acid C₁₋₈ alkyl ester monomer, preferably in an amount of 50 to 90 wt.-%, preferably 75 to 85 wt.-% relative to the monomer mixture; and
(b) at least one (meth)acrylic acid monomer, preferably in an amount of 10 to 50 wt.-%, preferably 15 to 25 wt.-% relative to the monomer mixture.

4. Method according to claim 3, wherein the at least one(meth)acrylic acid C₁₋₈ alkyl ester monomer is selected from the group consisting of methyl(meth)acrylate, ethyl(meth)acrylate, n-butyl(meth)acrylate, n-hexyl(meth)acrylate, 2-ethylhexyl(meth)acrylate, n-octyl(meth)acrylate, and combinations thereof, preferably a combination of methylmethacrylate and n-butylacrylate.

5. The method according to any one of claims 1 to 4, wherein the at least one hydrophobic flame retardant is selected from the group consisting of organohalogen flame retardants, organophosphorous flame retardants, and mixtures thereof, preferably selected from the group consisting of organochlorines, organobromines, non-halogenated organophosphorus flame retardants, halogenated organophosphorus compounds.1,2-di-[2-ethylhexylcarboxylate]-3,4,5,6-tetrabromobenzene, diphenyl tolyl phosphate, decabromodiphenyl ether (decaBDE), decabromodiphenyl ethane, brominated polystyrenes, brominated carbonate oligomers (BCOs), brominated epoxy oligomers (BEOs), tetrabromophthalic anyhydride, tetrabromobisphenol A (TBBPA), hexabromocyclododecane (HBCD), triphenyl phosphate (TPP), resorcinol bis(diphenylphosphate) (RDP), bisphenol A diphenyl phosphate (BADP), tricresyl phosphate (TCP), dimethyl methylphosphonate (DMMP), aluminum diethyl phosphinate, tris(2,3-dibromopropyl) phosphate (brominated tris), tris(1,3-dichloro-2-propyl)phosphate (chlorinated tris or TDCPP), tetrakis(2-chlorethyl)dichloroisopentyldiphosphate, and combinations thereof.

6. The method according to claim 5, wherein the at least one hydrophobic flame retardant is selected from the organobromines, preferably selected from the group consisting of 1,2-di-[2-ethylhexylcarboxylate]-3,4,5,6-tetrabromobenzene, diphenyl tolyl phosphate, decabromodiphenyl ether, decabromodiphenyl ethane, brominated polystyrenes, brominated carbonate oligomers, brominated epoxy oligomers, tetrabromophthalic anyhydride, tetrabromobisphenol A, and hexabromocyclododecane, or non-halogenated organophosphorus flame retardants, preferably selected from the group consisting of diphenyl tolyl phosphate, triphenyl phosphate, resorcinol bis(diphenylphosphate), bisphenol A diphenyl phosphate, tricresyl phosphate, trimethyl phosphate, triethyl phosphate, trixylenyl phosphate, cresyl diphenyl phosphate, and aromatic polyphosphates.

7. The method according to any one of claims 1 to 6, wherein the at least one hydrophobic flame retardant is contained in the aqueous dispersion in an amount of 2 to 25 wt.-%, preferably 5 wt.-% to 20 wt.-%, and more preferably 10 wt.-% to 15 wt.-% based on the total weight of the solid content of the aqueous dispersion.

8. The method according to any one of claims 1 to 7, wherein the at least one stabilizer is contained in the dispersion in an amount of 1 to 30 wt.-%, preferably 5 to 15 wt.-%, more preferably 7 to 12 wt.-%, based on the solid content of the dispersion.

9. The method of any one of claims 1 to 8, wherein the at least one stabilizer is a surfactant, preferably a combination of at least one nonionic surfactant, preferably a fatty alcohol polyglycol ether, and at least one anionic surfactant, preferably a fatty alcohol polyglycol ether sulfate, preferably in a weight ratio of 15:1 to 5:1.

10. The method according to any one of claims 1 to 9, wherein the dispersion has a solid content of 35 to 70 wt.-%, preferably 40 to 65 wt.-%, more preferably 45 to 60 wt.-%, relative to the total weight of the aqueous dispersion.

11. The method according to any one of claims 1 to 10, wherein the reaction mixture further comprises a chain transfer agent, preferably in an amount of up to 3 wt.-%, more preferably 0.1 to 1.5 wt.-% relative to the reaction mixture.

12. Method according to any one of claims 1 to 11, wherein
(1) step (1) is carried out with a high shear process; and/or
(2) the droplets generated in step (1) have a diameter of 100 to 3000 nm, preferably 150 to 1000 nm, and more preferably between 200 and 300 nm; and/or
(3) step (2) is carried out by adding a polymerization initiator, preferably a thermally activatable polymerization initiator; and/or
(4) step (2) further includes a postpolymerization step, preferably by adding a redox initiator; and/or
(5) the temperature in step (2) is 70 °C to 97 °C, preferably 75 °C to 95 °C, more preferably 78 °C to 90 °C, and even more preferably 82 °C to 87 °C; and/or
(6) step (2) is carried out for 1 to 4 hours, preferably 2 to 4 hours, and more preferably 3 to 4 hours; and/or
(7) the polymeric particles generated in step (2) have a diameter of 50 to 1000 nm, preferably 100 to 500 nm, and more preferably between 200 and 300 nm.

13. Aqueous dispersion obtainable according to a method of any one of claims 1 to 12.

14. Adhesive or coating composition comprising an aqueous dispersion according to claim 13.

15. Use of an aqueous dispersion according to claim 14 in an adhesive or coating composition.
